# EUROPEAN PATENT SPECIFICATION

(11) **EP 2 644 034 B1**
(45) Date of publication and mention of the grant of the patent: **01.10.2014**
(21) Application number: 13158726.3
(22) Date of filing: 12.03.2013
(51) Int. Cl.: A23C 9/123

(54) **Method for the preparation of yogurt**
Verfahren zur Joghurtherstellung
Procédé pour la préparation de yaourt

(30) Priority: 12.03.2012 IT VR20120041
(43) Date of publication of application: 02.10.2013
(73) Proprietor: Dimanu S.r.l., 38123 Trento (IT); Schettini, Antonio, 38100 Trento (IT)
(72) Inventor: SCHETTINI, Antonio, 38100 Trento (IT)
(74) Representative: Lissandrini, Marco

(56) References cited:
- FR-A1- 2 112 160
- US-A- 2 009 135
- US-A- 4 434 184
- US-A- 4 968 512
- US-A1- 2009 304 864
- B Özer: "6 Production of Concentrated Products" In: "Fermented Milks", 1 January 2006 (2006-01-01), Blackwell Science Ltd, XP055045789, pages 128-155, * page 129, paragraph 1 * * page 130, paragraph 2 - page 131, line 8; figure 6.1 * * page 132, paragraph 1 * * page 134, last paragraph; figure 6.6 *
- OZER B H ET AL: "Rheology and Microstructure of Labneh (Concentrated Yogurt)", JOURNAL OF DAIRY SCIENCE, AMERICAN DAIRY SCIENCE ASSOCIATION, US, vol. 82, no. 4, 1 April 1999 (1999-04-01), pages 682-689, XP027110995, ISSN: 0022-0302 [retrieved on 1999-04-01]

## Description

This invention relates to a method for the preparation of yogurt.

As is known, yogurt is a food derived from milk, with a semi-liquid consistency and slightly sour flavour which, due to the inoculation of specific milk ferments and to their proliferation, undergoes a fermentation process during which the lactose of the milk is transformed into lactic acid.

In accordance with the known art, the process for preparing yogurt comprises a first step of preparing a predetermined quantity of raw milk as a function of the desired quantity of yogurt to be prepared. Next, said raw milk is pasteurized so as to destroy the harmful bacteria. In particular, said pasteurization step is normally implemented by heating the milk to a temperature of at least 72°C and keeping it at said temperature for at least 15 seconds. Once the 15 seconds have passed, the milk is cooled to 8° - 10° centigrade. Moreover, the process comprises homogenizing (using known homogenizing machines) the pasteurized milk so as to obtain a homogeneous mixture of the substances contained in the milk. In particular, the homogenizing step decreases the tendency of the milk to curdle, thus obtaining a more fluid product.

Next, the currently known method comprises a fermenting step, which comprises bringing the homogenized milk to the temperature of 40° - 45° centigrade and injecting milk ferments into it (step also known with the term "inoculation of milk ferments"). Said fermenting step is then completed by keeping the milk containing the milk ferments at the temperature of approximately 45° for at least 4-5 hours.

Lastly, the method comprises cooling the fermented milk to a temperature of approximately 4° centigrade and keeping it at this temperature for at least 24 hours. After said period, the milk has become yogurt and is ready to be packaged and sold.

Examples of known methods for preparing yogurt are also described in documents US 4 434 184, US 4 968 512, US 2 009 135 and US 2009/304864.

However, this known process has certain drawbacks.

In effect, the consistency of the yogurt obtained is very fluid. More precisely, the yogurt has a semi-liquid consistency.

Thus, the yogurt is difficult to apply onto a food product, which is not shaped like a container.

For example, if the yogurt is spread on crispbread, the yogurt tends to run off the crispbread (both by passing through the holes in the crispbread and dripping from the sides of it) thus soiling the surrounding environment.

In effect, semi-liquid yogurt necessarily takes on the shape of the product onto which it is applied. Thus, in the example of crispbread, the yogurt tends to run off it as the latter is substantially planar in shape.

Thus, the semi-liquid consistency of the yogurt does not allow freely associating it with any other food product. In addition to this drawback, it should be noted that the yogurt may only be placed in containers defining an at least partly closed containing volume such as, for example, a glass. In effect, due to the semi-liquid consistency of the yogurt, the latter must be collected in a container in the same way as when liquids are transported.

Moreover, each of said containers must be completely sealed, at least during transport, to prevent the yogurt from leaking. So much so that, in the known art, yogurt is contained in special plastic cups closed at the top by specific tabs perimetrically sealed along the edge of the cup.

In this situation the aim of this invention is to implement a method which overcomes the aforementioned drawbacks.

It is also an aim of this invention to implement a method which makes a yogurt that stays in place when applied onto food products.

In particular, it is an aim of this invention to implement a method which makes a yogurt that is easy to package.

The aims indicated are substantially achieved by a method for the preparation of yogurt as described in the appended claims.

Further features and advantages of this invention will emerge more clearly from the detailed description of a preferred, but not exclusive embodiment of a method for the preparation of yogurt.

In particular, the method for the preparation of yogurt, according to this invention, comprises the operating steps described below.

A first operating step comprises preparing a predetermined quantity of milk.

Preferably, raw milk is used for the method according to this invention. As is known, raw milk is defined as milk in its natural state, just milked from the cow.

Clearly, the quantity of raw milk to be prepared varies as a function of the quantity of yogurt to be prepared. In detail, the quantity of yogurt to be prepared is substantially proportional to the quantity of raw milk to be prepared.

Alternatively, partly treated milk may also be used for this method, such as for example, whole and/or semi-skimmed and or UHT milk.

Moreover, the method comprises heating the milk to a temperature of at least 70° centigrade. In particular, this step corresponds to the step commonly known as "milk pasteurization". In effect, as already mentioned, pasteurization allows destroying the harmful bacteria of the milk and increasing the yield of the milk. Preferably, the method defined in this invention comprises heating the raw milk to a temperature of between 85° centigrade and 95° centigrade. Moreover, this method comprises keeping the raw milk at the temperature of between 85° centigrade and 95° centigrade for a time interval of between 15 minutes and 25 minutes. Preferably, said time interval is approximately 20 minutes.

If, in place of the raw milk, partly treated milk (whole and/or semi-skimmed and/or UHT milk) is used, the aforementioned step of heating the milk to a temperature of at least 70° centigrade and of keeping it at said temperature for a time interval of between 15 minutes and 25 minutes is in any event implemented so as to increase the yield of the milk. In effect, the step of heating and of and keeping the temperature of at least 70° causes the precipitation of the whey protein in the milk.

Following the step of heating the milk and of keeping it at the aforementioned temperatures, the milk is cooled to a temperature of between 40° centigrade and 60° centigrade. Preferably, the milk is cooled to a temperature of approximately 50° centigrade.

Moreover, after having cooled the milk to a temperature of between 40° centigrade and 60° centigrade, the method comprises injecting a plurality of lactic acid bacteria into the milk. In detail, said lactic acid bacteria are commonly known under the name of milk ferments.

Later, the method comprises keeping the milk containing the lactic acid bacteria at a temperature of between 35° centigrade and 55° centigrade for at least 2 hours so that the milk ferments. Thus, the milk is fermented by the milk ferments during which time the lactose is transformed into lactic acid. Preferably, this step is implemented by keeping the milk in an oven at a temperature of between 40° and 50° for a time interval of between 4 hours and 6 hours. Following this step, the fermented milk is cooled to a temperature of between 1° centigrade and 7° centigrade, and is kept at this temperature for at least 15 hours so as to obtain a body with a compact consistency.

Preferably, the fermented milk is cooled to a temperature of between 3° centigrade and 5° centigrade, and is kept at this temperature for at least 20 hours so as to at least obtain a partly solid body. This last step is advantageously implemented by placing the fermented milk in a refrigerator.

In other words, the body obtained after cooling has an at least partly solid consistency so as to define its own shape irrespective of the shape of the support on which it is positioned.

In particular, the body obtained, following the fermentation and the cooling of the milk, has a compact consistency. In other words, the body obtained has its own shape irrespective of the container in which it is placed.

Lastly, the compact body undergoes a drying step, which comprises lowering the moisture level in it. In other words, the solid body undergoes a process of partial dehydration so as to at least partly lose the liquids in it.

Advantageously, said drying step gives the body increased solidity and compactness. However, the compact body has a creamy consistency so as to be able to be spread onto any other food product.

Preferably, during the drying step, the body is kept at a temperature of between 1° centigrade and 7° centigrade for at least 15 hours. More preferably, during the drying step, the body is kept at a temperature of between 3° and 5° centigrade for at least 40 hours. Additionally, the step of drying the body is advantageously implemented in an environment with a relative humidity of between 50% and 70%.

Moreover, the step of drying the body comprises a first sub-step of preparing an at least partly perforated cloth and of keeping it spaced from a container for collecting the liquids. In detail, the cloth is kept spaced from the container for collecting the liquids by means of a spacing structure.

Moreover, the step of drying the body comprises a second sub-step of positioning the compact body on the perforated cloth so said body can drip. In other words, the spacing structure keeps the compact body spaced from the underlying container for collecting the liquids so as to promote dripping.

In effect, the perforated cloth allows the small liquid drops to pass through it in direction of the container for collecting the liquids.

In practice, the drying step is implemented through the dripping of the compact body.

It should be noted that the method according to this invention does not comprise a step of homogenizing the milk to promote obtaining the compact body. In effect, homogenizing the milk makes the latter fluid, thus preventing the compact body from being made.

Moreover, the yogurt obtained from this method is of the whole curd type.

Lastly, after the drying step, the method may comprise a step of adding aromatic substances for flavouring the yogurt.

A yogurt obtained according to the above-described method is also an aim of this invention. In particular, the yogurt is characterized in that it has a compact consistency (semi-solid) so as to keep its shape irrespective of the shape of a container in which the yogurt can be positioned.

Thus, during use, the yogurt may be spread on other food products.

An aim of this invention is also the use of a yogurt, obtained according to the above-described method, for covering, by spreading it, other food products.

This invention achieves the set aims.

In effect, the method allows obtaining a yogurt with a compact consistency so that it can be applied onto other food products. In other words, the yogurt has its own shape irrespective of the shape of the container in which it is placed.

In particular, the yogurt obtained from this invention may be spread onto a food product without the yogurt running off said food product, towards the outside environment.

Moreover, this invention facilitates the transport of yogurt because, since it has a compact consistency, it is not necessary for the yogurt to be contained in specific sealed plastic cups as described in the known art section. In effect, the yogurt made according to this invention may be easily wrapped in food-safe paper. It should also be noticed that this invention is relatively easy to produce and that even the cost linked to implementation of the invention is not very high.

## Claims

1. A method for preparing yogurt, **characterized in that** it comprises the steps of:
- preparing a predetermined quantity of milk;
- heating the milk to a temperature of at least 70° celsius;
- cooling the milk to a temperature of between 40° celsius and 60° celsius, and injecting a plurality of lactic acid bacteria into the milk;
- keeping the milk containing the lactic acid bacteria at a temperature of between 35° celsius and 55° celsius for at least 2 hours so that the milk ferments;
- cooling the fermented milk to a temperature of between 1° celsius and 7° celsius, and keeping the milk at the temperature of between 1° celsius and 7° celsius for at least 15 hours so as to obtain a body with a compact consistency;
- at least partly drying the body obtained to lower the moisture level in it.

2. A method according to claim 1, **characterized in that** during the drying step, the body is kept at a temperature of between 1° celsius and 7° celsius for at least 15 hours.

3. A method according to any one of the preceding claims, **characterized in that** the step of drying the body is implemented in an environment with a relative humidity of between 50% and 70%.

4. A method according to any one of the preceding claims, **characterized in that** the step of drying the body comprises the following sub-steps:
- preparing an at least partly perforated cloth and keeping it spaced from a container for collecting the liquids;
- positioning the container on the perforated cloth so said container can drip.

5. A method according to any one of the preceding claims, **characterized in that** the drying step is implemented after the fermented milk has remained at the temperature of between 1° celsius and 7°celsius for at least 15 hours.

6. A method according to any one of the preceding claims, **characterized in that** the step of heating the milk to a temperature of at least 70° celsius comprises keeping the milk at the temperature of at least 70° celsius for at least 10 minutes.

7. A method according to any one of the preceding claims, **characterized in that** the step of preparing the milk comprises preparing raw milk or partly treated milk.

8. A method according to any one of the preceding claims, **characterized in that** it does not comprise a step of homogenizing the milk to promote obtaining the compact body.

9. A method according to any one of the preceding claims, **characterized in that** after the drying step, it comprises a step of adding aromatic substances for flavouring the yogurt.

## Patentansprüche

1. Verfahren zur Joghurtherstellung, **dadurch gekennzeichnet, dass** es folgende Schritte umfasst:
- Vorbereiten einer bestimmten Menge an Milch;
- Erhitzen der Milch auf eine Temperatur von mindestens 70° Celsiusgrad;
- Abkühlen der Milch auf eine Temperatur zwischen 40 Celsiusgrad und 60 Celsiusgrad und Injizieren einer Vielzahl an Milchsäurebakterien in die Milch;
- Beibehalten der die Milchsäurebakterien enthaltenden Milch auf einer Temperatur zwischen 35 Celsiusgrad und 55° Celsiusgrad für mindestens 2 Stunden, sodass die Milch gärt;
- Abkühlen der gegärten Milch auf eine Temperatur zwischen 1 Celsiusgrad und 7 Celsiusgrad und Beibehalten der Milch auf einer Temperatur zwischen 1 Celsiusgrad und 7 Celsiusgrad für mindestens 15 Stunden, sodass ein Körper mit einer festen Konsistenz erhalten wird;
- mindestens teilweises Trocknen des erhaltenen Körpers, um den Feuchtigkeitsgehalt darin zu reduzieren.

2. Verfahren nach Anspruch 1, **dadurch gekennzeichnet, dass** der Körper während des Trocknungsschritts für mindestens 15 Stunden auf einer Temperatur zwischen 1 Celsiusgrad und 7 Celsiusgrad beibehalten wird.

3. Verfahren nach einem der vorhergehenden Ansprüche, **dadurch gekennzeichnet, dass** der Schritt zum Trocknen des Körpers in einer Umgebung durchgeführt wird, die eine relative Feuchtigkeit zwischen 50 % und 70 % aufweist.

4. Verfahren nach einem der vorhergehenden Ansprüche, **dadurch gekennzeichnet, dass** der Schritt zum Trocknen des Körpers folgende Unterschritte umfasst:
- Vorbereiten eines mindestens teilweise perforierten Stoffs und Aufrechterhaltung von dessen Beabstandung zu einem Behälter zum Sammeln der Flüssigkeiten;
- Positionieren des Behälters auf dem perforierten Stoff, sodass der Behälter abtropfen kann.

5. Verfahren nach einem der vorhergehenden Ansprüche, **dadurch gekennzeichnet, dass** der Trocknungsschritt durchgeführt wird, nachdem die gegärte Milch für mindestens 15 Stunden auf einer Temperatur zwischen 1 Celsiusgrad und 7 Celsiusgrad beibehalten wurde.

6. Verfahren nach einem der vorhergehenden Ansprüche, **dadurch gekennzeichnet, dass** der Schritt zum Erhitzen der Milch auf eine Temperatur von mindestens 70 Celsiusgrad das Beibehalten der Milch auf einer Temperatur von mindestens 70 Celsiusgrad für mindestens 10 Minuten umfasst.

7. Verfahren nach einem der vorhergehenden Ansprüche, **dadurch gekennzeichnet, dass** der Schritt zum Vorbereiten der Milch das Vorbereiten von Rohmilch oder teilweise behandelter Milch umfasst.

8. Verfahren nach einem der vorhergehenden Ansprüche, **dadurch gekennzeichnet, dass** es keinen Schritt zum Homogenisieren der Milch umfasst, um das Erhalten des festen Körpers zu fördern.

9. Verfahren nach einem der vorhergehenden Ansprüche, **dadurch gekennzeichnet, dass** es nach dem Trocknungsschritt einen Schritt des Hinzufügens von Aromastoffen umfasst, um dem Joghurt Geschmack zu verleihen.

## Revendications

1. Procédé pour la préparation de yaourt, **caractérisé en ce qu'**il comprend les étapes de :
- préparer une quantité prédéterminée de lait ;
- chauffer le lait à une température d'au moins 70° Celsius ;
- refroidir le lait à une température comprise entre 40 et 60° Celsius, et injecter une pluralité de bactéries de l'acide lactique dans le lait ;
- maintenir le lait contenant les bactéries de l'acide lactique à une température comprise entre 35 et 55° Celsius pendant au moins 2 heures pour permettre au lait de fermenter ;
- refroidir le lait fermenté à une température comprise entre 1 et 7° Celsius et maintenir le lait à une température comprise entre 1 et 7° Celsius pendant au moins 15 heures de sorte à obtenir un corps ayant une consistance compacte ;
- sécher au moins en partie le corps obtenu afin de diminuer la teneur en eau qu'il contient.

2. Procédé selon la revendication 1, **caractérisé en ce que** lors de l'étape de séchage, le corps est maintenu à une température comprise entre 1 et 7° Celsius pendant au moins 15 heures.

3. Procédé selon l'une quelconque des revendications précédentes, **caractérisé en ce que** l'étape de séchage du corps est mise en oeuvre dans un environnement ayant une humidité relative comprise entre 50% et 70%.

4. Procédé selon l'une quelconque des revendications précédentes, **caractérisé en ce que** l'étape de séchage du corps comprend les sous-étapes suivantes :
- préparer un tissu au moins en partie perforé et le maintenir éloigné d'un récipient servant à recueillir les liquides ;
- placer le récipient sur le tissu perforé de sorte que ledit récipient puisse s'égoutter.

5. Procédé selon l'une quelconque des revendications précédentes, **caractérisé en ce que** l'étape de séchage est mise en oeuvre après que le lait fermenté soit resté à une température comprise entre 1 et 7° Celsius pendant au moins 15 heures.

6. Procédé selon l'une quelconque des revendications précédentes, **caractérisé en ce que** l'étape de chauffage du lait à une température d'au moins 70° Celsius comprend le fait de maintenir le lait à la température d'au moins 70° Celsius pendant au moins 10 minutes.

7. Procédé selon l'une quelconque des revendications précédentes, **caractérisé en ce que** l'étape de préparation du lait comprend la préparation de lait cru ou de lait partiellement traité.

8. Procédé selon l'une quelconque des revendications précédentes, **caractérisé en ce qu'**il ne comprend pas une étape d'homogénéisation du lait de manière à favoriser l'obtention d'un corps compact.

9. Procédé selon l'une quelconque des revendications précédentes, **caractérisé en ce qu'**après l'étape de séchage, il comprend une étape destinée à ajouter des substances aromatiques pour aromatiser le yaourt.
